# FASCICULE DE BREVET EUROPEEN

(11) **EP 1 409 099 B1**
(45) Date de publication et mention de la délivrance du brevet: **24.11.2004**
(21) Numéro de dépôt: 02740842.6
(22) Date de dépôt: 29.05.2002
(51) Int. Cl.: B01D 3/06, B01D 5/00, B01D 1/30, C12G 1/02

(54) **INSTALLATION DE REFROIDISSEMENT PAR VAPORISATION PARTIELLE A BASSE PRESSION D'UN JUS CHAUFFE**
VORRICHTUNG ZUR KÜHLUNG VON EINEM WARMEN SAFT DURCH TEILVERDAMPFUNG BEI NIEDERDRUCK
SYSTEM FOR COOLING A HEATED JUICE BY PARTIAL LOW-PRESSURE EVAPORATION

(30) Priorité: 31.05.2001 FR 0107177
(43) Date de publication de la demande: 21.04.2004
(73) Titulaire: CENTRE NATIONAL DE LA RECHERCHE SCIENTIFIQUE (CNRS), 75794 Paris Cedex 16 (FR); Les Vignobles Andre Lurton, 33420 Grezillac (FR)
(72) Inventeur: NADEAU, Jean-Pierre, F-33170 Gradignan (FR); SEBASTIAN, Patrick, F-33140 Villenave D'Ornon (FR); CADIOT, Dominique, F-47380 Monclar D'Agenais (FR); CALLEDE, David, F-24200 Sarlat (FR)
(74) Mandataire: Peaucelle, Chantal
(86) Numéro de dépôt international: PCT/FR2002/001810
(87) Numéro de publication internationale: WO 2002/096530

(56) Documents cités:
- DE-A- 3 727 164
- DE-A- 19 826 682
- FR-A- 1 270 558
- FR-A- 2 712 147
- US-A- 1 799 478
- US-A- 2 881 116
- US-A- 3 933 600

## Description

La présente invention est relative à une installation, permettant d'assurer le refroidissement contrôlé, dans des conditions soigneusement déterminées, d'un jus liquide, notamment chargé de baies provenant d'une récolte agricole, et s'applique plus particulièrement quoique non exclusivement au traitement de jus de vendange au cours du processus de vinification de celui-ci.

On sait que les qualités d'un vin, en particulier ses propriétés organoleptiques, dépendent de sa concentration et de ses proportions dans un certain nombre de matières aromatiques, voire colorantes, en particulier du type arômes, précurseurs d'arômes, tanins, pigments, composés anthocyanes, et également de divers autres composés plus ou moins volatils tels que des polyphénols et polysaccharides, qui se révèlent être essentiellement contenus dans la peau ou pellicule des grains du raisin.

Le brevet français publié sous le n° FR-A-2 712 147 décrit un procédé pour effectuer un traitement initial d'un jus de vendange en vue d'extraire plus efficacement ces composés, grâce à une désorganisation mécanique des cellules de la peau des grains, favorisant leur libération et permettant d'optimiser les étapes ultérieures de vinification du jus récolté.

Ce procédé consiste notamment, après avoir chauffé le jus à traiter jusqu'à une température comprise entre 80 et 95°C durant quelques minutes par chauffage direct ou au moyen d'un échangeur pour développer déjà certaines propriétés organoleptiques de ce jus de manière en elle-même connue dans la technique antérieure, à soumettre le liquide ainsi chauffé, dans une cuve fermée, à une chute brutale de pression qui entraîne son refroidissement en masse et provoque simultanément une vaporisation partielle de l'eau contenue dans ce jus, la vapeur produite étant ensuite condensée et, en règle générale, renvoyée au jus refroidi pour satisfaire à la réglementation imposée.

Selon le brevet cité, cette détente sous pression réduite désorganise les tissus des grains et déstructure les cellules de sa peau, en libérant une quantité notable des composés que l'on souhaite précisément récupérer, en évitant qu'ils ne soient éliminés avec les résidus solides provenant de la pulpe du jus.

Le jus ainsi traité, qui sort de la cuve à température relativement basse, inférieure en l'espèce à 35°C, subit ensuite d'autres étapes classiques de macération, de cuvaison plus ou moins prolongée, c'est-à-dire de stockage en cuve pour permettre le développement de certaines réactions enzymatiques ou autres, avant que ne débute la fermentation, conduisant à l'élaboration finale du vin.

Le procédé proposé dans ce brevet antérieur permet ainsi d'obtenir un vin plus chargé en tanins, ayant plus de structure et également une plus grande souplesse, et qui est moins sensible aux altérations chimiques, avec au total une durée de garde largement améliorée.

Mais si l'étape de chauffage préalable suivie d'un refroidissement brutal par détente sous pression réduite présente, selon le brevet cité, des avantages non contestables, on peut penser que l'entraînement des arômes et autres substances provenant de la déstructuration des peaux des grains de raisin avec les vapeurs produites n'est pas optimale. En effet, la vapeur produite par la détente du jus chauffé est fondamentalement constituée par de la vapeur d'eau de sorte que les composés volatils ou non recherchés restent contenus dans la partie liquide refroidie. Ceci implique précisément que la température du jus de vendange soit rapidement et considérablement abaissée.

En effet, si la température devait rester supérieure à la limite de 30 à 35°C, la fermentation du jus commencerait immédiatement dans des conditions accélérées, avec des conséquences préjudiciables autant qu'irrémédiables pour les étapes suivantes de la vinification.

Il en résulte que, dans le procédé selon le brevet antérieur précité, le refroidissement du jus préalablement chauffé constitue un facteur déterminant lorsqu'il s'inscrit dans une perspective globale de fabrication du vin.

Or, la mise en oeuvre de ce procédé, d'ailleurs exclusivement revendiqué dans le brevet cité en ce qu'il indique permettre l'obtention d'un jus où les composés phénoliques et/ou les précurseurs d'arômes sont présents en quantité supérieure de 50% à celle constatée avec des bains traités par un procédé classique, nécessite pour obtenir une condensation convenable de la vapeur produite à la température indiquée, du fait de la détente à basse pression du jus, un condenseur où les surfaces d'échange sont importantes et le débit du fluide de refroidissement, constitué par de l'eau, très élevé.

Dès lors, l'installation réalisée, où la détente du jus chauffé à. basse pression est obtenue dans une cuve unique de grandes dimensions, n'est pas adaptée à un traitement localisé, notamment à proximité des lieux de chaque récolte, où le débit de l'eau disponible est nécessairement réduit, la température de cette eau sur place n'étant pas par ailleurs toujours adaptée aux conditions de refroidissement exigées.

Le brevet américain publié sous le n° US-A-1 799 478 décrit un dispositif d'évaporation et de concentration d'un liquide chauffé et chargé de matière solide comportant une cuve alimentée en continu par ce liquide. La cuve comprend ici trois compartiments séparés, superposés communiquant entre eux, où le liquide subit des détentes successives à des pressions décroissantes, chaque compartiment étant relié à un condenseur.

Cependant, les détentes produites par ce dispositif ne sont pas suffisantes, et le rendement de l'installation ainsi que son encombrement important la rendent peu efficace.

La présente invention a pour objet une installation où le refroidissement du jus chauffé par détente brutale sous pression réduite est menée de telle sorte que le débit d'eau nécessaire pour condenser la vapeur produite soit sensiblement plus faible, la taille des condenseurs étant plus réduite, l'entraînement des composés aromatiques et colorants dans la vapeur étant en outre plus limité, permettant de traiter essentiellement le jus lui-même, sans tenir compte des condensats renvoyés ultérieurement dans ce dernier.

L'invention a plus particulièrement encore pour but de contrôler en permanence les conditions dans lesquelles se produit le refroidissement du jus chauffé, avec un ajustement possible à tout instant des valeurs des pressions mises en jeu pour assurer la condensation de la vapeur, selon les conditions opératoires requises.

A cet effet, l'installation considérée, pour réaliser le refroidissement par évaporation d'un jus chauffé à une température initiale de l'ordre de 65 à 90°C, constitué d'un liquide chargé et de préférence d'un jus de vendange, comportant une cuve alimentée à débit continu par ce jus, lequel est soumis dans cette cuve à plusieurs détentes successives par réduction brutale de sa pression avec production de vapeur saturée à la température inférieure créée du fait de cette détente, ladite cuve comportant au moins deux compartiments séparés mais superposés, communicants, respectivement un premier compartiment supérieur et un second compartiment inférieur, où le jus subit ces détentes successives à deux pressions différentes et décroissantes, inférieures à celle du jus à son entrée dans la cuve, chaque compartiment étant relié à un condenseur, apte à condenser la vapeur produite par la détente, ces condenseurs étant montés en série ou en parallèle et reliés à une pompe à vide commune par l'intermédiaire d'au moins une vanne de réglage capable d'ajuster en permanence la pression dans chaque condenseur à une valeur inférieure à la tension de vapeur saturante correspondant à la température de la vapeur admise dans chacun de ces condenseurs, les compartiments de la cuve étant superposés et communiquant entre eux, dans celle-ci, par un orifice de passage du jus, fermé en tout ou en partie par un obturateur à positionnement variable, créant un effet pulsé pour l'évacuation des particules solides contenues dans le jus.

Par suite de la mise sous pression inférieure du jus dans chacun des compartiments successifs de la cuve, se produisent une vaporisation partielle de la phase liquide contenue dans ce jus et un abaissement de la température au sein de la masse jusqu'à une valeur qui dépend uniquement de cette pression.

Cependant, en raison du fractionnement de la cuve en au moins deux compartiments séparés et communicants, où les pressions sont ajustées par la pompe à vide et les vannes de réglage associées aux condenseurs à des valeurs différentes et décroissantes de l'un à l'autre, les gouttelettes produites dans chacun de ces condenseurs sont de taille plus importante, ce qui permet de les séparer plus aisément et surtout d'assurer que la majorité d'entre elles retombe vers le fond inférieur de chaque compartiment par gravité, et ne soit pas entraînée vers le condenseur correspondant.

Dans chaque compartiment, le débit massique de vapeur produite est plus faible et, pour une même vitesse d'entraînement, l'écart entre la température du jus chaud à l'entrée et la température de refroidissement obtenue, impose donc les dimensions du compartiment de la cuve correspondant, de sorte que, cet écart étant plus réduit, ces dimensions le seront également.

Il en résulte de plus une limitation de la surchauffe de la vapeur, d'où une plus grande facilité à la condenser.

Par ailleurs, la possibilité de réaliser une cuve de taille plus faible autorise un transport plus commode de celle-ci d'un lieu de production à un autre, contrairement à un ensemble à cuve unique, de dimensions nécessairement très grandes pour permettre le traitement en continu d'un débit de jus significatif.

Enfin, cet écart de température plus réduit dans chaque compartiment a pour conséquence que la surface d'échange dans le condenseur associé peut être également plus faible, nécessitant un débit d'eau de refroidissement plus limité, mieux compatible avec les possibilités usuelles de chaque exploitation, en particulier du réseau d'eau disponible sur place.

De préférence, l'obturateur est constitué d'un clapet de forme conique coopérant avec un siège de même profil ménagé dans une paroi de séparation des deux compartiments, en forme d'entonnoir, ce clapet étant solidaire d'un flotteur propre à le soulever de son siège sur une distance qui est fonction de la quantité de jus liquide recueillie dans le fond du premier compartiment et à ajuster l'ouverture du passage avec le second compartiment, disposé sous le premier.

Le clapet présente avantageusement un bord périphérique arrondi à sa partie supérieure pour faciliter son appui sur son siège conique dans la paroi de séparation et absorber ses éventuels désalignements dus aux turbulences du jus liquide dans le premier compartiment.

Selon une autre caractéristique particulière, le clapet est muni à sa base, à l'opposé de son bord périphérique dans sa partie supérieure, d'une plaque de butée, en position de relèvement maximal de ce clapet.

De préférence également, le flotteur comporte en outre un couvercle de protection vis-à-vis du liquide, porté par la surface interne du premier compartiment et qui s'étend transversalement au-dessus et à distance du flotteur.

Avantageusement, le couvercle de protection du flotteur comporte des tiges verticales pour le guidage de ses déplacements dans le premier compartiment.

Selon encore une autre caractéristique, la cuve communique dans le compartiment supérieur avec un premier condenseur par l'intermédiaire d'un dispositif dévésiculeur pour séparer les vapeurs produites admises dans ce condenseur d'une part, les gouttes et les particules solides chargeant le jus à traiter d'autre part. De préférence, ce. dispositif dévésiculeur est disposé à la partie supérieure de ce premier compartiment, au droit d'un conduit de liaison avec le condenseur.

Selon un autre aspect de l'invention, les deux condenseurs, respectivement réunis aux deux compartiments de la cuve à des pressions différentes, sont disposés en série ou en parallèle au moyen de tuyauteries de liaison, munies de vannes d'arrêt.

Le condenseur relié au premier compartiment comporte en amont une première vanne pour créer une perte de charge réglable, propre à ajuster la pression de la vapeur dans ce condenseur afin de permettre sa condensation.

Selon encore une autre caractéristique de l'invention, la pompe à vide commune, reliée aux condenseurs, est une pompe à anneau liquide, apte à maintenir la valeur de la pression -dans ces condenseurs à une valeur toujours inférieure à la pression de vapeur saturante dans les deux compartiments de la cuve, de manière à réaliser en permanence la condensation de cette vapeur, quel que soit le débit de celle-ci à l'admission dans ces condenseurs.

Avantageusement, la pompe à vide comporte un dispositif à éjecteur, propre à réduire encore sa pression en amont.

Enfin, l'installation comporte de préférence, à la sortie du deuxième compartiment, en partie basse de la cuve, une pompe d'extraction du jus refroidi, pouvant extraire aussi les condensats d'une bâche de récupération de ceux-ci, disposée à la sortie des deux condenseurs.

L'utilisation de l'ensemble de ces caractéristiques et tout spécialement la mise en oeuvre de deux compartiments superposés et communicants, ménagés à l'intérieur de la cuve, tout en diminuant le volume global de l'installation, permet de découpler et de gérer la répartition des pressions dans chacun de ces compartiments, indépendamment de la température de sortie du jus hors de ceux-ci. De la sorte, la déstructuration des baies et plus généralement des composants du jus traité peut être contrôlée indépendamment de cette température.

L'invention permet par ailleurs de concentrer le liquide refroidi, tout en diminuant le débit de l'eau de refroidissement nécessaire et/ou les niveaux de température.

D'autres caractéristiques d'une installation de refroidissement d'un jus liquide, établie conformément à l'invention, apparaîtront encore à travers la description qui suit d'un exemple de réalisation, donné à titre indicatif et non limitatif, en référence aux dessins annexés sur lesquels :
- La Figure 1 est un diagramme illustrant schématiquement l'ensemble de l'installation avec sa cuve à deux compartiments et les différents éléments de contrôle et de réglage qui lui sont associés.
- La Figure 2 est une vue schématique en coupe axiale d'un mode de réalisation de la cuve considérée.
- La Figure 3 est une vue en coupe, à plus grande échelle, illustrant la partie inférieure du premier compartiment de la cuve avec le clapet d'obturation de l'orifice de passage entre les deux compartiments.
- La Figure 4 illustre, à encore plus grande échelle, la structure du clapet de la Figure 3.
- La Figure 5 est une vue d'un détail du clapet.

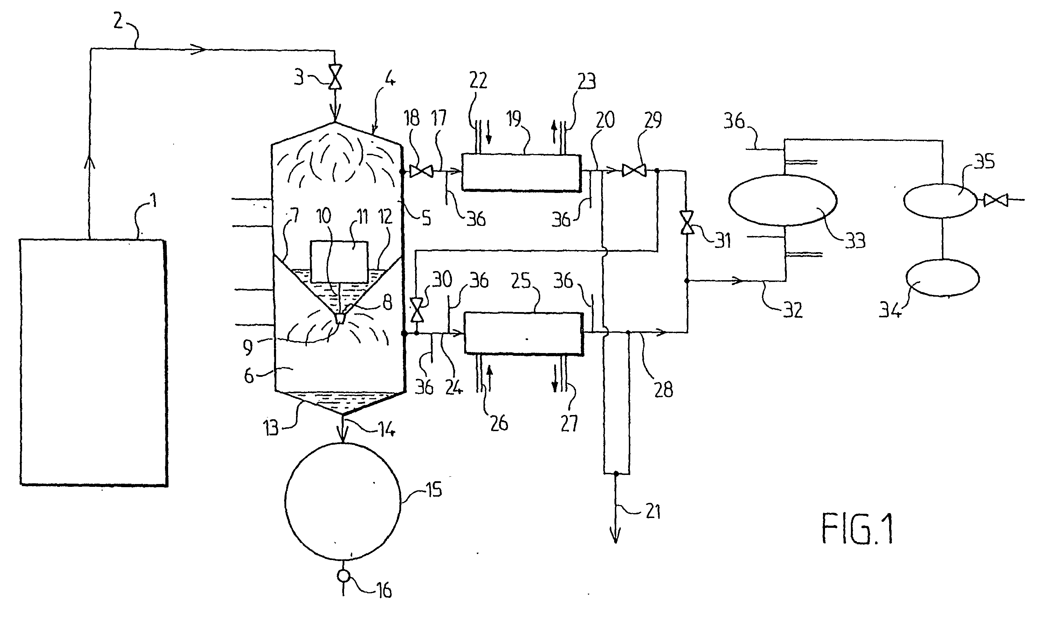

Sur la Figure 1, la référence 1 désigne un réservoir d'alimentation de l'installation considérée avec un jus liquide chargé, de préférence constitué par un jus de raisin, ce liquide étant porté à une température comprise approximativement entre 65 et 90°, à l'aide de moyens non représentés, par chauffage direct ou non, les modalités de chauffage du jus liquide, notamment par traversée d'un échangeur de chaleur ou par tout autre procédé classique, n'important pas directement à l'invention.

Le jus chauffé à la sortie du réservoir 1 est amené par une canalisation 2 munie d'une vanne d'admission 3 à la partie supérieure d'une cuve 4, réalisée conformément à l'invention et qui comporte notamment, dans l'exemple de réalisation considéré, deux compartiments superposés, respectivement 5 pour le compartiment supérieur et 6 pour le compartiment inférieur, ces compartiments étant séparés sensiblement dans la partie médiane de la cuve par une paroi de séparation 7, de préférence en forme d'entonnoir et qui comporte en son centre un orifice de passage 8 permettant d'établir une communication entre les deux compartiments.

L'orifice de passage 8 peut être obturé ou au contraire ouvert en fonction de la position relative par rapport à celui-ci d'un clapet 9, dont le détail de la réalisation sera précisé plus loin, ce clapet étant réuni par une tige de liaison 10 à un flotteur 11 qui permet de faire varier verticalement la position du clapet selon le niveau 12 du liquide recueilli à la base du premier compartiment 5 contre et au-dessus de la paroi 7.

La partie inférieure de la cuve 4 comporte un fond 13, de préférence également en forme d'entonnoir, qui communique par un conduit 14 avec une bâche 15 où se recueille le produit liquide sortant de la cuve, cette bâche étant réunie, par l'intermédiaire d'un compteur volumétrique 16 ou autre appareil de mesure équivalent à une pompe d'évacuation (non représentée), qui renvoie ce produit vers d'autres installations où celui-ci subit un traitement complémentaire sans rapport direct avec l'objet précis de l'invention.

En particulier, lorsque le jus traité est un jus de vendange, il peut être ainsi acheminé dans des installations complémentaires classiques, dans lesquelles sont réalisées les étapes nécessaires à sa vinification.

Le premier compartiment 5 de la cuve 4, situé à la partie supérieure de celle-ci, comporte une conduite 17 munie d'une première vanne 18 disposée en amont d'un premier condenseur de vapeur 19, la vapeur condensée produite étant recueillie dans une conduite de sortie 20 et renvoyée par une tuyauterie d'évacuation 21 dans le débit liquide qui sort de la cuve 4 à travers la bâche 15.

Le condenseur 19, appelé condenseur à haute pression pour les raisons qui seront exposées ci-après, par opposition à un condenseur analogue dit à basse pression, comporte des tubulures, respectivement d'admission 22 et d'évacuation 23, d'un liquide de refroidissement approprié, usuellement de l'eau en circulation continue.

Le compartiment inférieur 6 de la cuve 4, disposé dans celle-ci sous le premier compartiment 5, comporte de même une conduite de sortie 24, qui réunit ce compartiment à un second condenseur 25, dit à basse pression, celui-ci comportant, comme le condenseur à haute pression 19, des tubulures 26 et 27 d'admission et d'évacuation d'un liquide de refroidissement approprié.

La vapeur condensée qui est évacuée du condenseur 25, est recueillie dans une tubulure de sortie 28 et est également renvoyée par la tuyauterie d'évacuation 21 au débit de jus liquide qui sort de la bâche 15:

Les deux condenseurs 19 et 25, respectivement reliés aux compartiments 5 et 6 de la cuve 4, peuvent selon le cas être disposés en série l'un avec l'autre ou en parallèle, grâce à des vannes 29, 30 ou 31, respectivement ouvertes ou fermées selon le montage choisi.

En outre, la sortie commune des deux condenseurs est reliée par une conduite 32 à un débitmètre 33 lui-même réuni à une pompe à vide 34, de préférence à anneau liquide et avantageusement par l'intermédiaire d'un éjecteur 35. Des piquages 36 sont prévus en divers points du circuit pour le montage de thermocouples, permettant de relever la valeur des températures en chacun de ces points.

Le fonctionnement de l'installation décrite ci-dessus consiste essentiellement à soumettre le jus liquide chauffé, qui s'écoule dans l'un, puis dans l'autre de chacun des deux compartiments 5 et 6 de la cuve 4, à une pression très sensiblement inférieure à celle à laquelle il se trouve avant son entrée dans la cuve, c'est-à-dire à la pression atmosphérique, la pression dans le premier compartiment supérieur 5 étant par exemple de l'ordre de 100 mbar, alors qu'elle est abaissée à 30 mbar dans le compartiment inférieur 6.

Ainsi, le jus liquide chauffé, introduit à la partie supérieure du premier compartiment 5, va subir dans celui-ci une brusque détente permettant de le vaporiser brutalement et en partie, en l'amenant à une température inférieure, égale à celle qui correspond à la pression de vapeur saturante ainsi créée dans ce compartiment.

La vapeur créée, dite à haute pression par opposition à celle ultérieurement obtenue dans le second compartiment 6, est recueillie à travers la conduite 17 et la vanne 18 dans le premier condenseur 19, où les conditions de refroidissement et la perte de charge créée par cette vanne, en combinaison avec l'effet de la pompe à vide 34, le cas échéant associée à l'éjecteur 35, permettant d'assurer la condensation complète de cette vapeur et son renvoi éventuel au produit sortant de la cuve, comme déjà indiqué.

Avantageusement, les vapeurs créées par la détente du jus liquide chaud admis dans le premier compartiment 5, traversent un dévésiculeur ou séparateur (non représenté), avant d'être reprises par la conduite 17 et envoyées au condenseur à haute pression 19, cette conduite étant raccordée au compartiment, à la partie supérieure de celui-ci.

La détente du jus chauffé provoque par ailleurs, à l'intérieur du compartiment 5, la formation de gouttelettes de liquide qui tombent par gravité dans ce compartiment et se recueillent sur la paroi de séparation 7, en forme d'entonnoir, le séparant du second compartiment 6.

L'orifice de passage 8 prévu dans cette paroi est normalement obturé par le clapet 9, jusqu'au moment où le flotteur 11 solidaire de ce clapet, porté par le niveau 12 du liquide dans le fond du premier compartiment 5, est soulevé de son siège et ouvre ainsi la communication entre les compartiments 5 et 6, avant qu'il ne revienne dans sa position initiale et se soulève à nouveau, l'effet pulsé créé par ce clapet permettant en particulier d'évacuer efficacement les particules solides contenues dans le jus.

Le liquide déjà refroidi par suite de la détente créée dans le compartiment supérieur 5, subit derechef dans le second une nouvelle détente où la vapeur produite est recueillie cette fois dans les mêmes conditions que précédemment par le condenseur dit à basse pression 25, la température dans le second compartiment étant à nouveau réduite en fonction des conditions opératoires créées et en particulier de la pression de la vapeur saturante dans ce compartiment.

La fraction liquide recueillie à la base de la cuve 4 dans le fond du second compartiment 6 est ainsi ramenée à une température considérablement inférieure à celle du jus dans le réservoir d'alimentation 1, en passant notamment de 80 à 30°C environ, les deux détentes successives réalisées permettant d'assurer une déstructuration satisfaisante des baies du raisin et d'obtenir un produit final dans lequel la teneur en composants organoleptiques est très notablement améliorée.

Comme déjà indiqué, on constate ainsi que cette disposition avec deux compartiments superposés dans la cuve, permet de découpler et de gérer la répartition des pressions à l'intérieur de chacun de ces compartiments, la déstructuration des éléments solides contenus dans le jus pouvant être contrôlée indépendamment de sa température de sortie.

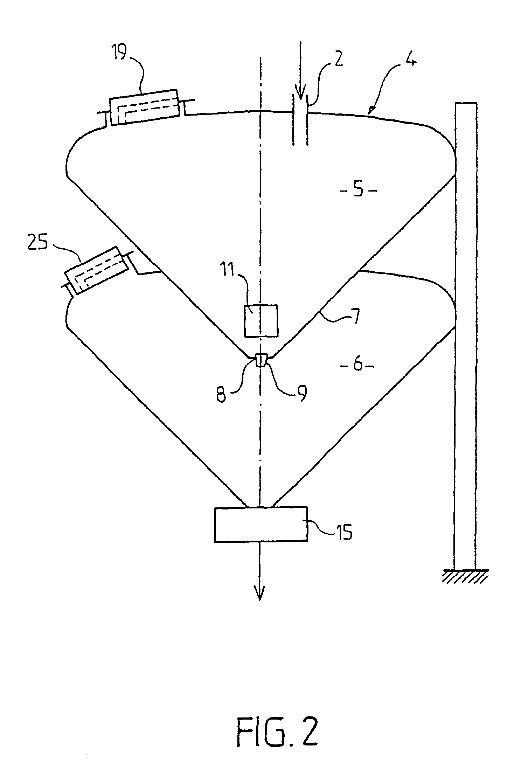

La Figure 2 illustre un mode de réalisation préféré d'une cuve 4 conforme à l'invention comprenant deux compartiments superposés 5 et 6, respectivement associés à deux condenseurs de la vapeur produite, l'un 19, réuni au compartiment supérieur 5, étant dit à haute pression, tandis que l'autre, relié au compartiment inférieur 6, est appelé à basse pression, les vapeurs obtenues par détente du jus liquide chaud dans ces compartiments successifs étant à des pressions différentes, amenant simultanément le liquide à des températures distinctes et abaissées de l'un à l'autre.

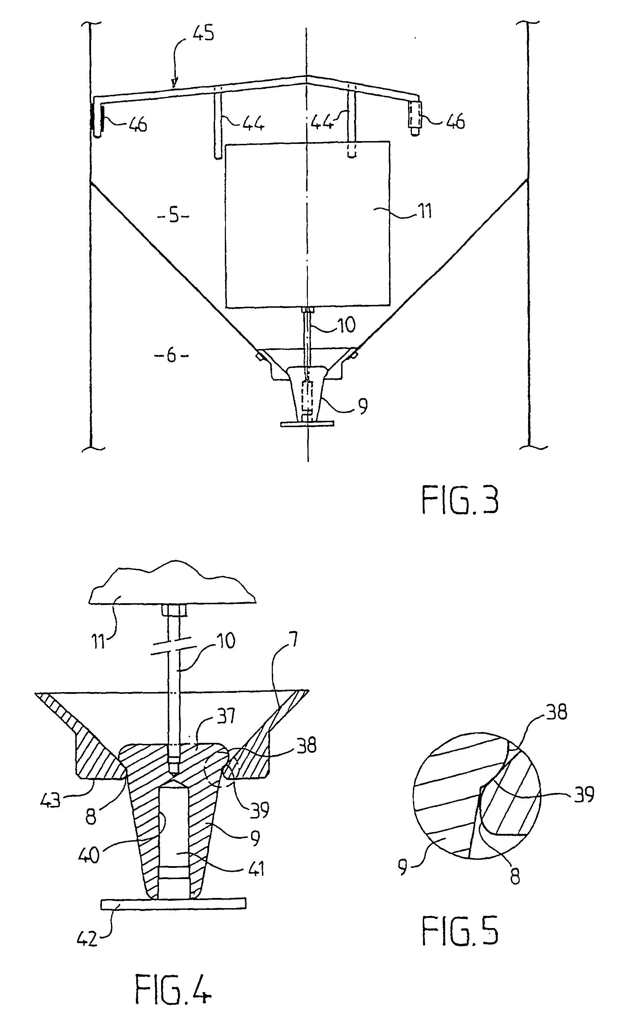

Les Figures 3 à 5 illustrent un mode de réalisation particulier du clapet 9 du flotteur 11 qui lui est relié par la tige 10.

Ce clapet 9 présente avantageusement un profil conique, avec une lèvre supérieure 37 présentant un bord périphérique 38 arrondi, afin de venir s'appliquer contre la paroi de séparation 7, même en cas de léger désalignement du clapet, lorsque celui-ci n'est pas soulevé de son siège 39, au droit de l'orifice de passage 8, entre les compartiments superposés 5 et 6.

Le clapet 9 comporte de préférence un trou borgne 40 dans lequel est engagée une tige 41 terminée par une plaque transversale 42, propre à venir buter contre une portée d'appui 43 prévue sous la paroi de séparation 7, cette plaque limitant ainsi le soulèvement maximal du clapet 9 par son flotteur 11, au fur et à mesure que le niveau du liquide recueilli dans le fond du premier compartiment 5 augmente.

Avantageusement, au cours des mouvements ascendants et descendants successifs du flotteur 11 sous l'effet des variations du niveau 12 du liquide dans ce compartiment 5, avec l'effet pulsé qui en résulte pour le clapet 9, ce flotteur est guidé au moyen de tiges verticales 44, portées par un couvercle 45 fixé par des pattes 46 contre la paroi interne du compartiment, comme illustré sur la Figure 3.

On réalise ainsi une installation permettant de refroidir un liquide chargé et en particulier un jus de vendange, d'une manière qui présente de nombreux avantages, ce refroidissement, pour un débit liquide donné à l'entrée, étant assuré de sorte qu'il permette, de façon en elle-même connue, de désorganiser mécaniquement de façon efficace les cellules de la peau des grains de raisin avec les avantages qui en découlent pour optimiser les qualités de ce jus en vue de sa vinification ultérieure.

Notamment, la réalisation de la cuve de détente en au moins deux compartiments séparés permet d'étager les niveaux de température successifs auxquels le jus est amené, en obtenant dans chaque compartiment une taille des gouttes liquides plus importante, limitant en particulier un entraînement de celles-ci avec la vapeur, ce qui facilite le fonctionnement des condenseurs et améliore leur efficacité.

Les dimensions de ces condenseurs peuvent être par ailleurs diminuées ; en outre, les débits du liquide de refroidissement amené à ces condenseurs peuvent être plus faibles et/ou la température du liquide plus élevée, de sorte que les conditions opératoires, et en particulier la pression créée par la vanne de réglage et la pompe à vide dans les compartiments de la cuve pour atteindre les températures désirées à la suite des détentes et de l'évaporation du jus dans les deux compartiments successifs, sont mieux adaptées à une installation transportable et moins onéreuse, apte à fonctionner sur site, directement sur le lieu d'une récolte.

Bien entendu, il va de soi que l'invention ne se limite pas à l'exemple de réalisation plus spécialement décrit ci-dessus en référence aux dessins annexés ; elle en embrasse au contraire toutes les variantes.

## Revendications

1. Installation de refroidissement par évaporation d'un jus chauffé à une température initiale de l'ordre de 80 à 90°C, constitué d'un liquide chargé et de préférence d'un jus de vendange, comportant une cuve alimentée à débit continu par ce jus, lequel est soumis dans cette cuve à plusieurs détentes successives par réduction brutale de sa pression avec production de vapeur saturée à la température inférieure créée du fait de cette détente, ladite cuve comportant au moins deux compartiments séparés mais superposés, communicants, respectivement un premier compartiment supérieur (5) et un second compartiment inférieur (6), où le jus subit ces détentes successives à deux pressions différentes et décroissantes, inférieures à celle du jus à son entrée dans la cuve, chaque compartiment étant relié à un condenseur (19, 25), apte à condenser la vapeur produite par la détente, ces condenseurs étant montés en série ou en parallèle et reliés à une pompe à vide (34) commune par l'intermédiaire d'au moins une vanne de réglage (18) capable d'ajuster en permanence la pression dans chaque condenseur à une valeur inférieure à la tension de vapeur saturante correspondant à la température de la vapeur admise dans chacun de ces condenseurs, les compartiments (5, 6) de la cuve étant superposés et communiquant entre eux, dans celle-ci, par un orifice (8) de passage du jus, fermé en tout ou en partie par un obturateur à positionnement variable, créant un effet pulsé pour l'évacuation des particules solides contenues dans le jus.

2. Installation selon la revendication 1, **caractérisée en ce que**. l'obturateur est constitué d'un clapet (9) de forme conique coopérant avec un siège de même profil ménagé dans une paroi de séparation (7) des deux compartiments (5, 6) en forme d'entonnoir, ce clapet étant solidaire d'un flotteur (11) propre à le soulever de son siège sur une distance qui est fonction de la quantité de jus liquide recueillie dans le fond du premier compartiment (5), et à ajuster l'ouverture du passage avec le second compartiment, disposé sous le premier.

3. Installation selon la revendication 2, **caractérisée en ce que** le clapet (9) présente un bord périphérique arrondi (38).

4. Installation selon l'une des revendication 3 ou 4, **caractérisée en ce que** le clapet (9) est muni à sa base, à l'opposé de son bord périphérique (38) d'une plaque de butée en position de relèvement maximal de ce clapet.

5. Installation selon l'une quelconque des revendications 2 à 4, **caractérisée en ce que** le flotteur (11) comporte un couvercle de protection (45) vis-à-vis du liquide, porté par la surface interne du premier compartiment (5) et qui s'étend transversalement au-dessus et à distance du flotteur.

6. Installation selon la revendication 5, **caractérisée en ce que** le couvercle de protection (45) du flotteur (11) comporte des tiges verticales (44) pour le guidage de ses déplacements dans le premier compartiment (5) .

7. Installation selon l'une quelconque des revendications de 1 à 6, **caractérisée en ce que** la cuve (4) communique dans le compartiment supérieur (5) avec un premier condenseur (19) par l'intermédiaire d'un dispositif dévésiculeur pour séparer les vapeurs produites admises dans ce condenseur d'une part, les gouttes et les particules solides chargeant le jus à traiter d'autre part.

8. Installation selon la revendication 7, **caractérisée en ce que** le dispositif dévésiculeur est disposé à la partie supérieure du compartiment (5), au droit d'un conduit de liaison (17) avec le condenseur (19).

9. Installation selon l'une quelconque des revendications 1 à 8, **caractérisée en ce que** les deux condenseurs (19, 25), respectivement réunis aux deux compartiments (5, 6) de la cuve (4) à des pressions différentes, sont disposés en série ou en parallèle au moyen de tuyauteries de liaison, munies de vannes d'arrêt (29, 30, 31).

10. Installation selon l'une quelconque des revendications 1 à 9, **caractérisée en ce que** le condenseur (19) relié au compartiment supérieur (5) comporte en amont une vanne (18) pour créer une perte de charge réglable, propre à ajuster la pression de la vapeur dans ce condenseur.

11. Installation selon l'une quelconque des revendications 1 à 10, **caractérisée en ce que** la pompe à vide (34) commune, reliée aux condenseurs (19, 25), est une pompe à anneau liquide.

12. Installation selon la revendication 11, **caractérisée en ce que** la pompe à vide (34) comporte un dispositif à éjecteur (35).

13. Installation selon l'une quelconque des revendications 1 à 12, **caractérisée en ce qu'**elle comporte, à la sortie du deuxième compartiment (6), en partie basse de la cuve (4), une pompe d'extraction du jus refroidi.

## Patentansprüche

1. Anlage zum Verdampfungskühlen eines Saftes, der auf eine Anfangstemperatur in der Größenordnung von 80 bis 90 °C erhitzt ist, der durch eine mit FeststoffPartikeln beladene Flüssigkeit und vorzugsweise durch einen Saft der Weinernte gebildet ist, umfassend ein Gefäß, das in kontinuierlichem Zufluss mit diesem Saft gespeist wird, welcher in diesem Gefäß mehreren aufeinander folgenden Entspannungen durch plötzliche Reduzierung seines Drucks unterzogen wird, wobei ein bei der tieferen Temperatur, die aufgrund dieser Entspannung erzeugt wird, gesättigter Dampf entsteht, wobei besagtes Gefäß mindestens zwei getrennte, jedoch übereinander liegende und kommunizierende Abteile umfasst, jeweils ein erstes, oberes Abteil (5) und ein zweites, unteres Abteil (6), worin der Saft diese aufeinander folgenden Entspannungen bei zwei unterschiedlichen und abnehmenden Drücken erfährt, die unterhalb des Drucks des Saftes bei seinem Einlauf in das Gefäß liegen, und jedes Abteil mit einem Kondensator (19, 25) verbunden ist, der zum Kondensieren des durch die Entspannung erzeugten Dampfes geeignet ist, wobei diese Kondensatoren in Reihe oder parallel angeordnet sind und mit einer gemeinsamen Unterdruckpumpe (34) über mindestens ein Steuerventil (18) verbunden sind, das zum ständigen Einstellen des Drucks in jedem Kondensator auf einen Wert geeignet ist, der unter der Spannung des gesättigten Dampfes liegt, die der Temperatur des in jeden der Kondensatoren eingelassenen Dampfes entspricht, wobei die Abteile (5, 6) des Gefäßes übereinander liegen und in diesem miteinander über eine Öffnung (8) zum Durchlassen des Saftes kommunizieren, welche Öffnung insgesamt oder teilweise durch einen Verschluss mit variabler Stellung verschlossen ist, wodurch ein pulsierender Effekt für das Entfernen von in dem Saft enthaltenen festen Partikeln geschaffen wird.

2. Anlage nach Anspruch 1, **dadurch gekennzeichnet, dass** der Verschluss durch eine Ventilklappe (9) mit konischer Form gebildet ist, die mit einem Sitz gleichen Profils zusammenwirkt, der in einer Trennwand (7) der beiden Abteile (5, 6) in Gestalt eines Trichters eingearbeitet ist, wobei diese Ventilklappe mit einem Schwimmer (11) fest verbunden ist, der dazu geeignet ist, sie von ihrem Sitz um einen Abstand abzuheben, der abhängig von der Menge des flüssigen Saftes ist, der auf dem Boden des ersten Abteils (5) angesammelt ist, und um die Öffnungsweite des Durchlasses zum zweiten, unterhalb des ersten angeordneten Abteils einzustellen.

3. Anlage nach Anspruch 2, **dadurch gekennzeichnet, dass** die Ventilklappe (9) einen abgerundeten Umfangsrand (38) aufweist.

4. Anlage nach einem der Ansprüche 2 oder 3, **dadurch gekennzeichnet, dass** die Ventilklappe (9) an ihrer Basis, abgewandt von ihrem Umfangsrand (38), mit einer Anschlagplatte versehen ist, die in der maximalen Abhebestellung dieser Ventilklappe wirksam ist.

5. Anlage nach einem der Ansprüche 2 bis 4, **dadurch gekennzeichnet, dass** der Schwimmer (11) einen Schutzdeckel (45) zum Abdecken gegen die Flüssigkeit umfasst, der durch die Innenfläche des ersten Abteils (5) getragen wird und der sich quer über dem Schwimmer und mit Abstand von diesem erstreckt.

6. Anlage nach Anspruch 5, **dadurch gekennzeichnet, dass** der Schutzdeckel des Schwimmers (11) vertikale Stangen (44) zum Führen seiner Verschiebungen in dem ersten Abteil (5) umfasst.

7. Anlage nach einem der Ansprüche 1 bis 6, **dadurch gekennzeichnet, dass** das Gefäß (4) in dem oberen Abteil (5) mit einem ersten Kondensator (19) mittels einer Abscheideeinrichtung kommuniziert, um die produzierten und in diesen Kondensator eingelassenen Dämpfe einerseits und die Tropfen und den zu behandelnden Saft beladenden Festpartikel andererseits zu trennen.

8. Anlage nach Anspruch 7, **dadurch gekennzeichnet, dass** die Abscheideeinrichtung im oberen Teil des Abteils (5) angeordnet ist, im Verlauf einer Leitung (17) zum Verbinden mit dem Kondensator (19).

9. Anlage nach einem der Ansprüche 1 bis 8, **dadurch gekennzeichnet, dass** die beiden Kondensatoren (19, 25), die jeweils mit den beiden Abteilen (5, 6) des Gefäßes bei verschiedenen Drücken zusammengefasst sind, in Reihe oder parallel mittels Verbindungsleitungen angeordnet sind, die mit Schließventilen (29, 30, 31) ausgestattet sind.

10. Anlage nach einem der Ansprüche 1 bis 9, **dadurch gekennzeichnet, dass** der mit dem oberen Abteil (5) verbundene Kondensator stromauf ein Ventil (18) umfasst, um einen regelbaren Druckverlust zu erzeugen, der geeignet ist, den Druck des Dampfes in diesem Kondensator einzustellen.

11. Anlage nach einem der Ansprüche 1 bis 10, **dadurch gekennzeichnet, dass** die gemeinsame, mit den Kondensatoren verbundene Unterdruckpumpe (34) eine Pumpe mit Flüssigkeitsring ist.

12. Anlage nach Anspruch 11, **dadurch gekennzeichnet, dass** die Unterdruckpumpe (34) eine Strahleinrichtung (35) umfasst.

13. Anlage nach einem der Ansprüche 1 bis 12, **dadurch gekennzeichnet, dass** sie am Auslass des zweiten Abteils (6) im unteren Teil des Gefäßes (4) eine Pumpe zum Absaugen des gekühlten Saftes umfasst.

## Claims

1. Installation for cooling by evaporation of a juice heated to an initial temperature of the order of 80 to 90°C, constituted by a charged liquid and preferably by a juice from a harvested crop, comprising a vat supplied with a continuous flow of this juice, which is subjected in this vat to several successive pressure reductions by sudden reduction of its pressure with the production of saturated vapour at the lower temperature created as a result of this pressure reduction, said vat comprising at least two compartments, separate but superposed, communicating with each other, respectively a first upper compartment (5) and a second lower compartment (6), where the juice is subjected to these successive pressure reductions to two different and decreasing pressures, lower than that of the juice at its entry into the vat, each compartment being connected to a condenser (19, 25), which is able to condense the vapour produced by the pressure reduction, these condensers being serially mounted or parallel mounted and connected to a common vacuum pump (34) by means of at least one control valve (18) capable of permanently adjusting the pressure in each condenser to a value which is lower than the saturation vapour pressure corresponding to the temperature of the vapour created in each of these condensers, the compartments (5, 6) of the vat being superposed and, communicating with each other, in the latter, by an opening (8) through which the juice passes, closed either fully or partially by a variably positioned shutter element, creating a pulsed effect in order to remove the solid particles contained in the juice.

2. Installation according to claim 1, **characterized in that** the shutter element is constituted by a conical shaped shutter element (9) cooperating with a seat with the same profile arranged in a dividing wall (7) of the two compartments (5, 6) in the shape of a funnel, this shutter element being integral with a float (11) which is able to raise it from its seat to a distance which is a function of the quantity of liquid juice collected in the bottom of the first compartment (5), and to adjust the opening to the second compartment, arranged under the first.

3. Installation according to claim 2, **characterized in that** the shutter element (9) has a rounded peripheral edge (38).

4. Installation according to one of claims 3 or 4, **characterized in that** the shutter element (9) is equipped at its base, opposite its peripheral edge (38) with a stop plate in the maximum raised position of this shutter element.

5. Installation according to any one of claims 2 to 4, **characterized in that** the float (11) comprises a cover (45) to protect it against the liquid, carried by the internal surface of the first compartment (5) and which extends transversely over and at a distance from the float.

6. Installation according to claim 5, **characterized in that** the protective cover (45) of the float (11) comprises vertical rods (44) for guiding its movements in the first compartment (5).

7. Installation according to any one of claims 1 to 6, **characterized in that** the vat (4) communicates in the upper compartment (5) with a first condenser (19) by means of a droplet-catching device for separating the produced vapours created in this condenser on the one hand, the drops and the solid particles charging the juice to be treated on the other hand.

8. Installation according to claim 7, **characterized in that** the droplet-catching device is arranged in the upper section of the compartment (5), to the right of a conduit (17) connected to the condenser (19).

9. Installation according to any one of claims 1 to 8, **characterized in that** the two condensers (19, 25), connected respectively to the two compartments (5, 6) of the vat (4) at different pressures, are arranged serially or in parallel by means of connecting tubes, equipped with stop valves (29, 30, 31).

10. Installation according to any one of claims 1 to 9, **characterized in that** the condenser (19) connected to the upper compartment (5) comprises a valve (18) upstream to create an adjustable loss of charge, which can adjust the pressure of the vapour in this condenser.

11. Installation according to any one of claims 1 to 10, **characterized in that** the common vacuum pump (34), connected to the condensers (19, 25), is a liquid ring pump.

12. Installation according to claim 11, **characterized in that** the vacuum pump (34) comprises an ejector device (35).

13. Installation according to any one of claims 1 to 12, **characterized in that** it comprises, at the outlet to the second compartment (6), in the lower part of the vat (4), a pump for extraction of the cooled juice.
